# EUROPEAN PATENT SPECIFICATION

(11) **EP 0 367 487 B1**
(45) Date of publication and mention of the grant of the patent: **20.03.1996**
(21) Application number: 89311016.3
(22) Date of filing: 25.10.1989
(51) Int. Cl.: G01S 3/48

(54) **RF signal direction finding apparatus**
Gerät zur Hochfrequenz-Richtungsbestimmung
Appareil pour déterminer la direction d'un signal à fréquence radio

(30) Priority: 31.10.1988 US 265071
(43) Date of publication of application: 09.05.1990
(73) Proprietor: TRW INC., Cleveland Ohio 44124 (US)
(72) Inventor: Thorpe, Carlton J., Poway California 92064 (US)
(74) Representative: Allden, Thomas Stanley

(56) References cited:
- DE-A- 3 639 643
- DE-B- 1 273 014
- US-A- 3 813 672

## Description

### Field of the Invention.

The present invention relates to systems for determining the direction of incoming RF electromagnetic energy propagated through space from a remote RF source and, more particularly, to an RF direction finding system that uses a single RF receiver.

### Background.

Direction finding or angle of arrival systems as they are known are measuring and indicating devices that have application in both military and commercial pursuits to locate remote RF sources. Electronic equipment of that type monitors the RF spectrum, which includes the microwave frequency range, for RF signals and determines the direction of the source of that signal: In military applications these signals may originate from a hostile radar transmitter and in commercial applications the RF signals may emanate from a directional marker or beacon signal transmitter. Specifics of those applications are known to those skilled in the art and need not be addressed in further detail in this application. Each system requires accurate measurement of the phase difference between the phase of signals received at two or more receiving antennas that are located physically spaced from one another. Given two ac signals that are sinusoidal in character and of the same frequency, the amplitude of the signals follow the mathematical expression A1=KsinΩt, where K represents the absolute value of the signals's amplitude, Ω the frequency, and t represents time. If the second signals amplitude is governed by the A2=Ksin(Ωwt+Θ), the factor Θ represents the phase difference between the two signals. Thus if Θ equals 0, the two signals are said to be "in-phase". Depending upon the direction of propagation of the incoming RF signal relative to the spatial positions of the antennas, the signal arrives at the two antennas slightly displaced in time. Consequently, the signal received at one antenna may be ever so slightly displaced in electrical phase relative to the phase of that same signal as it appears at the second antenna in the system. Since the signal emanates from a single source, this phase difference is thus representative of the angle at which the incoming signal traveled to the receiving station containing the direction finding equipment. In military application this direction information is considered together with other kinds of information provided by other electronic equipment, not relevant to the present invention, to enable personnel operating the direction finding equipment to determine the position of the hostile radar source.

Typical phase measurement systems in direction finding application incorporates two complete RF receivers which are phase matched and/or calibrated to provide the necessary reference and angle signals needed for accurate phase measurements. The RF receivers are complex and expensive pieces of electronic equipment. They must be checked and calibrated from time to time by skilled technicians to ensure that the receivers are properly "matched" so that accurate measurements are obtained. Such duplication of significant system elements, such as the RF receivers, is expensive.

A principal purpose of the present invention is to reduce the cost of manufacturing and maintaining RF direction finding equipment. A further object of the invention is to eliminate the need for a second RF receiver in RF direction equipment. An additional object is to provide direction finding apparatus that uses existing components and technology and that is of improved reliability resulting from elimination of complex elements typical of existing direction finding systems. A still further object is to provide a simplified method for determining the angle of arrival of an RF pulse signal.

DE-B-1273014 discloses a direction finding system in which signals from two antennae are connected to a switch which alternately connects each antenna to a single receiver. The signal from the receiver is mixed with a reference signal, amplified and passed to a phase discriminator which produces voltages representative of the relative phases of the signals from the two antennae. A second switch which operates in time with the first switch passes signals via respective integrators to a difference amplifier which produces a voltage representative of the phase difference between the two signals.

The present invention provides apparatus for determining the angle of arrival of an RF signal emitted by a remote transmitter, comprising:
receiving means responsive to reception of said RF signal at two spaced locations for forming a composite signal, containing a signal sample representative of the RF signal received at one location alternating seriatum with a signal sample representative of the RF signal from the other location; and
phase indicating means for providing a representation of electrical phase difference between the signals received at said locations; whereby said angle of arrival of said RF signal is obtained;
characterised by signal transmission means responsive to said composite signal for outputting said composite signal at first and second outputs; said signal transmission means including delay means for delaying said composite signal output at said first output to cause a signal sample received at said one location and contained within said composite signal to overlap in time with a signal sample received at said other location and contained within said composite signal, the phase indicating means being responsive to the outputs from the signal transmission means.

The apparatus may include at least two physically spaced receiving antennas for providing the RF signal, an RF tuner for receiving RF at an input and converting such RF to an intermediate frequency, and a phase detector including display apparatus, such as an oscillograph type CRT display, for providing a measurement and/or display of phase difference between signals applied to two phase detector inputs. Electronic switching means may be provided to automatically alternately periodically switch the outputs from the two receiving antennas to the input of the RF tuner. In turn the tuner's output may be coupled to a power divider, the output of which is branched, one output being coupled through a first IF amplifier to one of the two inputs of the phase detector and the second output being coupled through a circuit, containing a delay line and an IF amplifier in series, coupled to the second input of the phase detector.

The phase detector may display a visual representation of the signal in the first branch or reference signal for calibration purposes. As the receiver input is switched back and forth between the two antennas at a rate higher than the delay duration provided by the delay circuit in the second branch of the circuit, the two signals inputted concurrently to the phase detector at a point in time stem from the separate antennas, and thus overlap in time. Due to such overlap between the delayed first signal from the second antenna and the reference signal from the first antenna an output level is provided that represents the phase difference of the signals present at the systems receiving antennas. Accordingly a relative phase difference measurement is obtained with but a single receiver allowing for the advantageous results previously described.

A further advantage of the invention is that existing equipment may be modified to incorporate the novel circuit by the addition of a small number of component elements, leaving the second receiver of such systems, which theoretically becomes redundant, as a back-up or spare.

The invention also provides the method of determining the angle of arrival of an RF signal propagating in space including the steps of:
sampling the signal as received at each of two spaced locations to provide a serial signal stream containing alternate samples of said RF signal displaced in time;
characterised by:
branching said stream into two channels, a first channel and a second channel;
delaying the passage of said RF signal stream through said first channel to delay arrival of the signals for a predetermined interval; and
comparing the outputs of the two channels and determining the phase difference between the signals from the two channels.

The foregoing and additional objects and advantages of the invention together with the structure characteristic thereof, which was only briefly summarised in the foregoing passages, becomes more apparent to those skilled in the art upon reading the detailed description of a preferred embodiment, which follows in this specification, taken together with the illustration thereof presented in the accompanying drawings.

### In the drawings:

Figure 1 illustrates an embodiment of the invention in block diagram form;
Figures 2a through 2e illustrate signals representative of signals occurring at various instances of time in the operation of the embodiment of Figure 1;
Figures 3a, 3b, 3c, and 3d illustrate further the timing of and processing of the various signals;
Figure 4 is a depiction of signals appearing on a display device in one practical embodiment incorporating the invention; and
Figure 5 illustrates a prior art RF direction finding system in block diagram form.

### Detailed Description of a Preferred Embodiment.

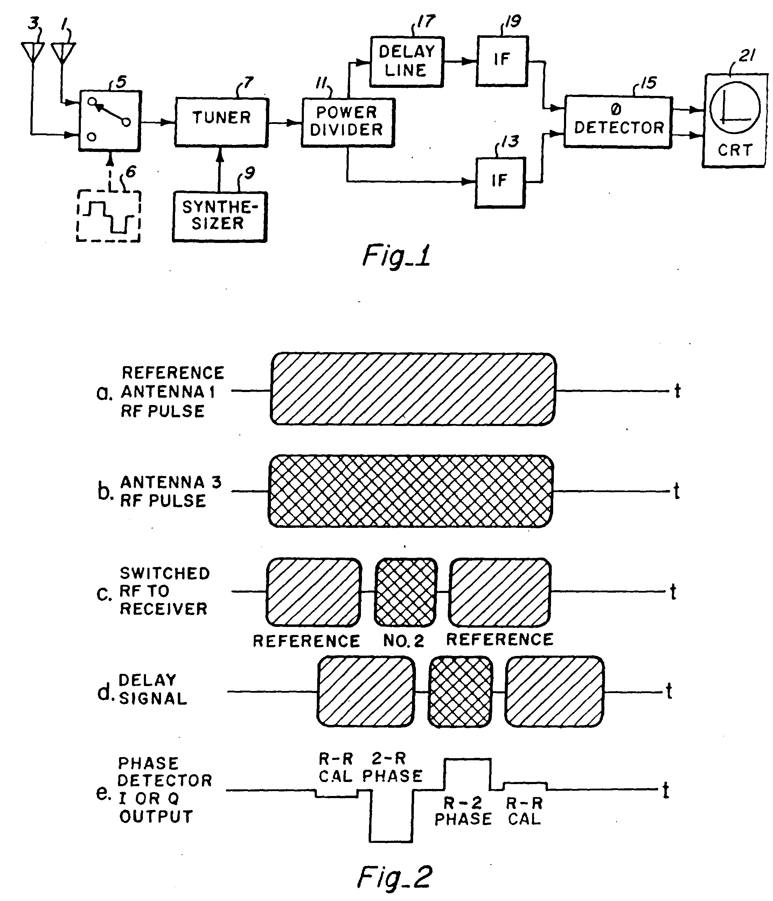

In the embodiments of figure 1, a pair of antennas 1 and 3, which are spatially located at points physically distant from one another, typically on the order of less than one wavelength at the RF frequency, are connected to the respective two inputs of a switch 5, represented in the figure in block diagram form. The output of the switch is coupled to the input of RF tuner 7, suitably of the superhetrodyne type. Switch 5, the antenna switch, is a single pole multiple throw type switch, and, specifically is an electronic switch, the details of which are hereinafter described in greater detail. Tuner 7 is of a conventional superhetrodyne tuner structure and operates in conjunction with a known type of local oscillator or frequency synthesizer 9 to produce a corresponding signal at a lower frequency, the "i.f." frequency. The output of the synthesizer, referred to as an intermediate frequency local oscillator signal or, simply, IF OSC signal, is applied to the tuner's local oscillator input as illustrated. The IF signal output of the tuner is connected to an input of a power divider 11. An IF amplification circuit 13 is coupled between the output of power divider 11 and an input of phase detector 15, all of which are conventional and known electronic component structures.

A second output from power divider 11 is coupled in series circuit with a delay line 17 and an IF amplifier 19. The output of the latter amplifier is coupled into the second input of phase detector 15. The output of the phase detector is coupled to a display device 21, such as an oscillograph or oscilloscope, a conventional instrument used in electronic apparatus for measuring phase of applied signals and for viewing signals in many other applications.

Antenna switch 5 is a conventional RF switch, suitable for coupling RF signals without introduction of significant signal loss. It is controlled by conventional timing circuits, illustrated in dash lines 6 that cause the switch to connect to the antennas alternately on a periodic basis and is "turned on" by personnel operating the system. The switch connects the first antenna through to the tuner for a predetermined dwell interval, then switches the transfer circuit to the second antenna, resulting in an inherent very brief switching interval with neither antenna connected, and then connects the second antenna to the RF tuner for a further dwell interval, suitably the same duration as the dwell interval in which the first antenna was connected through to the tuner. Thereafter the switch reconnects the first antenna to the RF tuner. The switching process repeats periodically under control of timing circuits 6.

In operation an RF signal originating at a remote source, not illustrated, is incident upon both antennas, reference antenna 1 and antenna 3, the comparison or "angle" antenna. As depicted in figures 2a and 2b in graphic form, the signals are of a limited duration or pulse of a width T1. It is noted that the duration of signals as illustrated in figures 2a and 2b are the same. Effectively they commence and end simultaneously. As those skilled in the art appreciate, the signals are effectively present at both antennas, are of the same average amplitude, and differ essentially only in electrical phase. For example, if the remote RF source is located equidistant from the two antennas, then the RF signals, which propagate at the velocity of light, arrive at the two antennas simultaneously. Consequently in that circumstance there will be no phase difference between the two signals.

In other cases there is a phase difference. Because the antennas are spaced only a short physical distance apart, on the order of feet and not miles or hundreds of miles and usually less than one wavelength, the signals are effectively received at the antennas simultaneously in macro state, differing only in the instantaneous amplitude of the RF signal that exists at that time. That difference in instantaneous amplitude is representative of the electrical phase.

RF tuner 7 detects the signals in a conventional superhetrodyne type detection process. The incoming signal is "beat" or mixed with the high frequency signal supplied by frequency synthesizer 9 to form a corresponding signal at another frequency corresponding to the difference between the two frequencies, referred to as an intermediate frequency or IF. Though such superheterodyne type frequency "down conversion" is not theoretically critical to the invention, in the practical sense, such down conversion is always used. The lower frequencies obtained are easier to handle and the components are less expensive as those skilled in the art know of and appreciate. The derived IF signal is supplied from the tuner output to the input of power divider 11, which divides that signal between the power divider's two output branches.

The first portion of the signal is outputted from one branch to IF amplifier 13 and from that amplifier the amplified IF signal is applied to one input of phase detector 15. The second portion of the signal outputted from the power divider's second branch is applied to delay line 17, in which the signal is delayed or effectively stored for an interval. Following a delay interval the signal is then amplified in IF amplifier 19 and is applied to the second input of the phase detector. The two IF amplifiers are essentially identical and provide the same gain to the applied signals so that the signals in each path are maintained essentially the same, except for slight losses in the delay circuit.

Figure 2c presents the amplitude of the signal output of switch 5. The output passes the reference signal from antenna 1 for a predetermined "dwell" interval. Then, following a short switching time interval, the output passes the output of antenna 3 for a certain dwell interval, suitably identical in duration to the first interval. Following another short switching interval, the antenna switch again passes the reference signal from antenna 1 into the tuner for another dwell interval. This process repeats as the time multiplexing process resulting from the automatic periodic switching of antenna switch 5 repeats.

The dwell interval typically is no greater than one half the duration of the input pulse. By way of specific example, the pulsed RF signal is of a duration of five hundred nanoseconds, that of the first dwell interval, two hundred nanoseconds, and that of the switching interval, two hundred nanoseconds.

Figure 2d represents the signals appearing at the output of IF amplifier 19. These signals are as illustrated delayed in time as compared to or referenced against the signals appearing at the output of IF amplifier 13 as described in connection with the preceding figure 2c. The resulting output of phase detector 15 as viewed on an oscillograph or oscilloscope is illustrated in figure 2e. The video information provided represents system calibration, the difference in phase between the second antenna, antenna 3, and the reference antenna, antenna 1, the difference in phase between the reference antenna and the second antenna and system calibration.

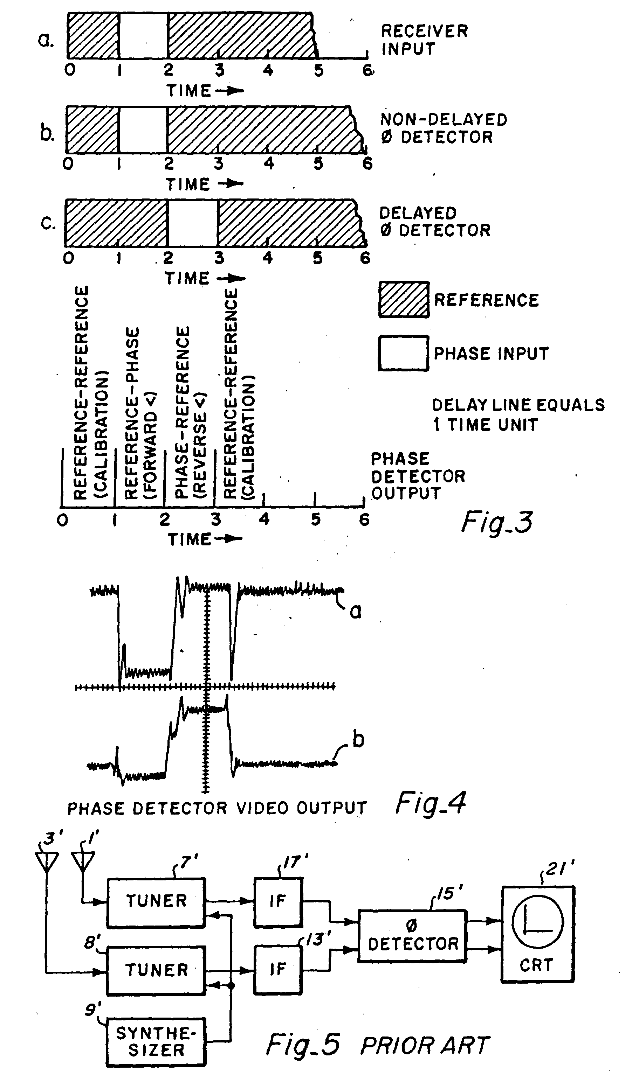

Figure 3a represents the reference and phase signals as applied to the receivers, that is the tuner input, the hatched lines indicating the input supplied by antenna 1, the clear portion representing that supplied by antenna 3.

As shown in figures 3b and 3c, the delay interval provided by delay line 17 has to be such that the "phase" input, represented by the clear block, overlaps the reference input, represented by the hatch lines, to the phase detector. This time delay is one time unit. This time delay also needs to be one half the switching time.

The delay line may be of any suitable construction that provides an appropriate delay and, ideally, is essentially independent of frequency in the range of frequency of interest, namely the intermediate frequency.

In one practical embodiment of the invention, a demonstration receiver made by the TRW company was used, the RF switch was one made available by the Konwave company, the IF amplifiers were type SL 2521 EXP obtained from the Plessy Company and the phase detector was a model PC 120 obtained from the Olektron Company. The oscilloscope picture presented in figure 4 provides a graphic illustration of the results obtained in the described practical embodiment. This shows two waveforms, the first, a, represents the sine of the angles and the second, b, represents the cosine of those angles. The phase detector converts the phase difference between the signals presented at the phase detectors inputs into sine and cosine output signals, often referred to as "I & Q" signals. The outputs are voltages that are sinusoidal in nature and follow a sine/cosine relationship based on the phase difference of the input signal.

Both the sine and cosine output signals are required in order to resolve an ambiguity associated with a single output; ie. the sine of 45 degrees and of 135 degrees are of the same value. However the cosine of 45 degrees and 135 degrees are unequal and therefor the cosine signal can be used to resolve the ambiguity in angle value presented by the sine output signal. As presented in this figure the wave forms are not entirely perfect but include some element of "ringing" as results from the switching in the circuit and the natural resonances of the electrical circuit.

A prior art system is illustrated in block diagram form in figure 5. The prior art system includes the same two antennas 1' and 3', a pair of tuners 7' and 17', a frequency synthesizer 9' which is coupled to each of the tuners, a first IF amplifier 17' whose input is connected of tuner 7' the output of which is connected to one input of phase detector 15' A second IF amplifier 13' has an input connected to the output of the second tuner 8' and an output connected to the second input of phase detector 15' The output of the phase detector is connected to a display device, such as an oscilloscope 21', just as in the arrangement used in the specific example earlier described.

In an actual system and as an alternative embodiment of the invention the display device used in the basic demonstration system earlier described is replaced by an automated measuring device, suitably an analog to digital, A to D, converter of conventional structure, not illustrated. The analog to digital converter converts the voltage outputs from the phase detector into the form of digital information, digitized phase angle information. In turn the digitized phase angle information is processed by conventional digital techniques and is used for any application requiring knowledge of the bearing angle between a receiving system or station and a radio signal source.

The "switching" phase measurement system takes advantage of a delay line that is placed in the receivers intermediate frequency circuit to store a sample of the reference signal from the first or reference antenna, during the time when the RF receiver is switched to the signal outputted from the second antenna. The stored reference signal is then compared in phase with the non delayed signal. As is apparent, the system requires only a minimum of calibration and/or phase matching of the systems components. This is so because essentially all of the circuit elements located between the antenna input switch and the phase detector are common to both signal circuits, the reference signal and the angle signal and, hence, changes in the electrical characteristics of the circuits cannot differentially affect the relative phase of the two signals. Both signals are changed to the same degree by any change in the circuit component while the difference, which is the important aspect, remains constant.

There is an exception: The two separate IF amplifiers are not common to both circuits and, though being of identical structure, those amplifiers could differ in electrical characteristics as could change with the ambient conditions, such as temperature.

The difference between the two IF amplifiers appears as the calibration phase error "CAL" in figure 2(e). The CAL phase angle is mathematically subtracted from the measured angle to determine the true phase angle difference between the two input signals. The system is essentially calibrated on a measurement by measurement basis. In the demonstration system described the calibration is made twice during the 500 nanosecond measurement period.

It is believed that the foregoing description of the preferred embodiment of the invention is sufficient in detail to enable one skilled in the art to make and use the invention. However, it is expressly understood that the details of the elements which are presented for the foregoing enabling purpose is not intended to limit the scope of the invention, in as much as equivalents to those elements and other modifications thereof, all of which come within the scope of the invention, become apparent to those skilled in the art upon reading this specification. Thus the invention is to be broadly construed within the full scope of the appended claims.

## Claims

1. Apparatus for determining the angle of arrival of an RF signal emitted by a remote transmitter, comprising:
receiving means (5,7) responsive to reception of said RF signal at two spaced locations for forming a composite signal, containing a signal sample representative of the RF signal received at one location alternating seriatum with a signal sample representative of the RF signal from the other location; and
phase indicating means (15) for providing a representation of electrical phase difference between the signals received at said locations; whereby said angle of arrival of said RF signal is obtained;
characterised by signal transmission means (11,13,17,19) responsive to said composite signal for outputting said composite signal at first and second outputs; said signal transmission means including delay means (17) for delaying said composite signal output at said first output to cause a signal sample received at said one location and contained within said composite signal to overlap in time with a signal sample received at said other location and contained within said composite signal, the phase indicating means being responsive to the outputs from the signal transmission means.

2. Apparatus as claimed in claim 1 wherein said phase indicating means comprises further: phase detector means (15), said phase detector means being coupled to said outputs of said first and second signal transmission channels and providing two outputs; and oscilloscope means (21) coupled to said phase detector means (15) for displaying the relative electrical phase indicium outputted from said phase detector means.

3. Apparatus as claimed in claim 1 or 2 further comprising at least two physically spaced antennas (1,3) for receiving a propagating RF pulse signal, whereby said angle of arrival is represented by the difference in electrical phase in the RF signal as received at the different antennas, the receiving means including switch means (5) for periodically alternately coupling the receiving means to each of said antennas to define said composite signal and for applying said composite signal concurrently to each of first and second signal transmission channels of said signal transmission means, said first transmission channel including said delay means (17) for delaying an inputted signal for a predetermined interval; whereby the signal outputted from said second signal transmission channel is displaced in time from the same signal outputted from said first signal transmission channel.

4. Apparatus as claimed in claim 3 wherein said switch means (5) is arranged to couple the receiving means (5,7) to said antennas (1,3) for a predetermined dwell interval, and wherein said switch means (5) has a transition interval between said dwell intervals in which said switching means couples neither antenna, said transition interval being substantially smaller than said dwell intervals.

5. Apparatus as claimed in claim 3 or 4 wherein said switch means (5) is arranged to couple the receiving means (5,7) to said antennas (1,3) for a predetermined dwell angle and said predetermined delay interval of said delay means is equal to the sum of the dwell interval of said switching means (5) and one half of the switching time of said switching means.

6. Apparatus as claimed in claim 4 or 5 wherein said RF pulse signal is within a predetermined range of pulse durations; wherein said dwell interval is no greater than said pulse duration; and wherein said predetermined interval provided by said delay means (17) equals the sum of one half of the duration of the RF pulse and the transition switching time of said switch means (5).

7. Apparatus as claimed in any of claims 3 to 6 wherein said first transmission channel includes IF amplifier means (19); and wherein said second transmission channel includes IF amplifier means (13).

8. Apparatus as claimed in any of claims 3 to 7 wherein said switch means (5) comprises RF switching means having two inputs and an output; said receiving means further comprises RF tuner means (7) for deriving an IF signal from inputted RF signals; said output of said switch means (5) being coupled to said RF tuner means (7) for supplying RF signals thereto; and said signal transmission means includes power divider means (11) having an input and two outputs for dividing signals applied at an input to said two outputs; said input of said power divider means being coupled to said RF tuner means and said two outputs of said power divider means being coupled to said first (17,19) and second (13) signal transmission channels, respectively.

9. Apparatus as claimed in any of claims 3 to 8 wherein said second transmission channel (13) is substantially identical to said first transmission channel (17,19) in all respects, exclusive of said delay means.

10. A method of determining the angle of arrival of an RF signal propagating in space including the steps of:
sampling the signal as received at each of two spaced locations to provide a serial signal stream containing alternate samples of said RF signal displaced in time;
characterised by:
branching said stream into two channels, a first channel and a second channel;
delaying the passge of said RF signal stream through said first channel to delay arrival of the signals for a predetermined interval; and
comparing the outputs of the two channels and determining the phase difference between the signals from the two channels.

## Patentansprüche

1. Ein Gerät zum Bestimmen des Eintreffwinkels eines von einem entfernten Sender emittierten HF-Signals, das folgendes umfaßt:
eine Empfangseinrichtung (5, 7), die auf den Empfang des HF-Signals an zwei Orten im Abstand voneinander reagiert, zum Bilden eines Signalgemisches, welches eine das an einem Ort empfangene HF-Signal verkörpernde Signalabtastung der Reihe nach abwechselnd mit einer das HF-Signal vom anderen Ort verkörpernden Signalabtastung enthält; und
eine Phasen-Angabeeinrichtung (15) zum Bereitstellen einer Darstellung der elektrischen Phasendifferenz zwischen den an den Orten empfangenen Signalen; wodurch der Eintreffwinkel des HF-Signals erhalten wird;
gekennzeichnet durch eine Signalübertragungseinrichtung (11, 13, 17, 19), die auf das Signalgemisch reagiert, zum Ausgeben des Signalgemisches an ersten und zweiten Ausgängen; wobei die Signalübertragungseinrichtung eine Verzögerungseinrichtung (17) zum Verzögern der Signalgemischausgabe am ersten Ausgang enthält, um zu bewirken, daß eine am einen Ort empfangene und im Signalgemisch enthaltene Signalabtastung mit einer am anderen Ort empfangenen und im
Signalgemisch enthaltenen Signalabtastung zeitlich überlappt, wobei die Phasen-Angabeeinrichtung auf die Ausgaben von der Signalübertragungseinrichtung reagiert.

2. Gerät wie in Anspruch 1, bei dem die Phasen-Angabeeinrichtung weiter folgendes umfaßt: eine Phasendetektoreinrichtung (15), wobei die Phasendetektoreinrichtung an die Ausgaben der ersten und zweiten Signalübertragungskanäle gekoppelt ist und zwei Ausgaben liefert; und eine an die Phasendetektoreinrichtung (15) gekoppelte Oszilloskopeinrichtung (21) zum Anzeigen der von der Phasendetektoreinrichtung ausgegebenen relativen elektrischen Phasenangaben.

3. Gerät wie in Anspruch 1 oder 2, das weiter wenigstens zwei in physikalischem Abstand voneinander angeordnete Antennen (1, 3) zum Empfangen eines sich ausbreitenden HF-Impulssignals umfaßt, womit der Eintreffwinkel durch den Unterschied in der elektrischen Phase des an den unterschiedlichen Antennen empfangenen HF-Signals verkörpert wird, wobei die Empfangseinrichtung eine Umschalteinrichtung (5) zum periodischen abwechselnden Koppeln der Empfangseinrichtung an jede der Antennen, um das Signalgemisch zu definieren, und zum Anlegen des Signalgemisches an jeden von ersten und zweiten Signalübertragungskanäle der Signalübertragungseinrichtung enthält, wobei der erste Übertragungskanal die Verzögerungseinrichtung (17) zum Verzögern eines eingegebenen Signals um eine vorherbestimmtes Intervall enthält; wodurch das vom zweiten Signalübertragungskanal ausgegebene Signal gegenüber demselben vom ersten Signalübertragungskanal ausgegebenen Signal zeitlich verschoben wird.

4. Gerät wie in Anspruch 3, bei dem die Umschalteinrichtung (5) so angeordnet ist, daß sie die Empfangseinrichtung (5, 7) während eines vorherbestimmten Schließintervalls an die Antennen (1, 3) koppelt, und bei dem die Umschalteinrichtung (5) ein Übergangsintervall zwischen den Schließintervallen besitzt, in dem die Umschalteinrichtung keine von beiden Antennen koppelt, wobei das Übergangsintervall wesentlich kleiner als die Schließintervalle ist.

5. Gerät wie in Anspruch 3 oder 4, bei dem die Umschalteinrichtung (5) so angeordnet ist, daß sie die Empfangseinrichtung (5, 7) während eines vorherbestimmten Schließwinkels an die Antennen (1, 3) koppelt, und das vorherbestimmte Verzögerungsintervall der Verzögerungseinrichtung gleich der Summe aus dem Schließintervall der Umschalteinrichtung (5) und einer Hälfte der Umschaltzeit der Umschalteinrichtung ist.

6. Gerät wie in Anspruch 4 oder 5, bei dem das HF-Impulssignal innerhalb eines vorherbestimmten Bereichs von Impulsdauern liegt; worin das Schließintervall nicht größer als die Impulsdauer ist; und worin das von der Verzögerungseinrichtung (17) bereitgestellte vorherbestimmte Intervall gleich der Summe aus einer Hälfte der Dauer des HF-Impulses und der Übergangs-Umschaltzeit der Umschalteinrichtung (5) ist.

7. Gerät wie in jedem der Ansprüche 3 bis 6, bei dem der erste Übertragungskanal eine ZF-Verstärkereinrichtung (19) enthält; und bei dem der zweite Übertragungskanal eine ZF-Verstärkereinrichtung (13) enthält.

8. Gerät wie in jedem der Ansprüche 3 bis 7, bei dem die Umschalteinrichtung (5) eine HF-Umschalteinrichtung mit zwei Eingängen und einem Ausgang umfaßt; wobei die Empfangseinrichtung weiter eine HF-Tunereinrichtung (7) zum Ableiten eines ZF-Signals aus den eingegebenen HF-Signalen umfaßt; wobei der Ausgang der Umschalteinrichtung (5) zum Einspeisen von HF-Signalen in die HF-Tunereinrichtung (7) an diese gekoppelt ist; und die Signalübertragungseinrichtung eine Leistungsteilereinrichtung (11) mit einem Eingang und zwei Ausgängen zum Aufteilen von an einen Eingang angelegten Signalen auf die beiden Ausgänge enthält; wobei der Eingang der Leistungsteilereinrichtung an die HF-Tunereinrichtung gekoppelt ist und die beiden Ausgänge der Leistungsteilereinrichtung jeweils an erste (17, 19) und zweite (13) Signalübertragungskanäle gekoppelt sind.

9. Gerät wie in jedem der Ansprüche 3 bis 8, bei dem der zweite Übertragungskanal (13) abgesehen von der Verzögerungseinrichtung in jeder Hinsicht im wesentlichen identisch mit dem ersten Übertragungskanal (17, 19) ist.

10. Ein Verfahren zur Bestimmung des Eintreffwinkels eines sich im Raum ausbreitenden HF-Signals, mit den Schritten:
Abtasten des Signals, wie es an jedem von zwei Orten mit Abstand voneinander empfangen wird, um einen seriellen Strom von Signalen bereitzustellen, der zeitlich verschoben abwechselnde Abtastungen des HF-Signals enthält; gekennzeichnet durch:
Verzweigen des Stroms in zwei Kanäle, einen ersten Kanal und einen zweiten Kanal;
Verzögern des Durchgangs des Stroms von HF-Signalen durch den ersten Kanal, um das Eintreffen der Signale um ein vorherbestimmtes Intervall zu verzögern; und
Vergleichen der Ausgaben der beiden Kanäle und Bestimmen der Phasendifferenz zwischen den Signalen aus den beiden Kanälen.

## Revendications

1. Appareil destiné à déterminer l'angle d'arrivée d'un signal RF émis par un émetteur éloigné, comprenant :
des moyens de réception (5, 7) réagissant à la réception du signal RF à deux emplacements espacés en formant un signal composite, contenant un échantillon de signal représentatif du signal RF reçu à un premier emplacement, alternant en série avec un échantillon de signal représentatif du signal RF provenant du second emplacement ; et
des moyens d'indication de phase (15) destinés à fournir une représentation d'une différence de phase électrique entre les signaux qui sont reçus aux emplacements, grâce à quoi on obtient l'angle d'arrivée du signal RF ;
caractérisé par des moyens de transmission de signal (11, 13, 17, 19) qui réagissent au signal composite en émettant le signal composite sur des première et seconde sorties ; ces moyens de transmission de signal comprenant des moyens de retard (17) pour retarder le signal composite qui est émis à la première sortie, pour faire en sorte qu'un échantillon de signal qui est reçu au premier emplacement et qui est contenu dans le signal composite, soit en recouvrement dans le temps avec un échantillon de signal qui est reçu au second emplacement et qui est contenu dans le signal composite, les moyens d'indication de phase réagissant aux signaux de sortie des moyens de transmission de signal.

2. Appareil selon la revendication 1, dans lequel les moyens d'indication de phase comprennent en outre : des moyens détecteurs de phase (15), ces moyens détecteurs de phase étant couplés aux sorties des premier et second canaux de transmission de signal et fournissant deux signaux de sortie ; et des moyens à oscilloscope (21) couplés aux moyens détecteurs de phase (15) pour visualiser la représentation de phase électrique relative qui est émise par les moyens détecteurs de phase.

3. Appareil selon la revendication 1 ou 2, comprenant en outre au moins deux antennes (1, 3) physiquement espacées, pour recevoir un signal impulsionnel RF qui se propage, grâce à quoi l'angle d'arrivée est représenté par la différence de phase électrique dans le signal RF qui est reçu aux différentes antennes, les moyens de réception comprenant des moyens de commutation (5) pour connecter alternativement et périodiquement les moyens de réception à chacune des antennes, de façon à définir le signal composite, et pour appliquer simultanément le signal composite à chacun des premier et second canaux de transmission de signal des moyens de transmission de signal, le premier canal de transmission comprenant les moyens de retard (17) destinés à retarder d'un intervalle prédéterminé un signal qui est appliqué en entrée ; grâce à quoi le signal qui est emis par le second canal de transmission de signal est déplacé dans le temps par rapport au même signal émis par le premier canal de transmission de signal.

4. Appareil selon la revendication 3, dans lequel les moyens de commutation (5) sont conçus pour connecter les moyens de réception (5, 7) aux antennes, pendant un intervalle de maintien prédéterminé,et dans lequel les moyens de commutation (5) ont un intervalle de transition entre les intervalles de maintien pendant lequel les moyens de commutation ne connectent aucune antenne, cet intervalle de transition étant notablement inférieur aux intervalles de maintien.

5. Appareil selon la revendication 3 ou 4, dans lequel les moyens de commutation (5) sont conçus pour connecter les moyens de réception (5, 7) aux antennes (1, 3) pendant un angle de maintien prédéterminé, et l'intervalle de retard prédéterminé des moyens de retard est égal à la somme de l'intervalle de maintien des moyens de commutation (5) et de la moitié du temps de commutation des moyens de commutation.

6. Appareil selon la revendication 4 ou 5, dans lequel le signal impulsionnel RF est compris dans une plage prédéterminée de durées d'impulsion ; dans lequel l'intervalle de maintien n'est pas supérieur à la durée d'impulsion ; et dans lequel l'intervalle prédéterminé qui est produit par les moyens de retard (17) est égal à la somme de la moitié de la durée de l'impulsion RF et du temps de commutation de transition des moyens de commutation (5).

7. Appareil selon l'une quelconque des revendications 3 à 6, dans lequel le premier canal de transmission comprend des moyens amplificateurs FI (19) ; et dans lequel le second canal de transmission comprend des moyens amplificateurs FI (13).

8. Appareil selon l'une quelconque des revendications 3 à 7, dans lequel les moyens de commutation (5) comprennent des moyens de commutation RF ayant deux entrées et une sortie ; les moyens de réception comprennent en outre des moyens syntoniseurs RF (7) pour élaborer un signal FI à partir de signaux RF appliqués en entrée ; la sortie des moyens de commutation (5) étant connectée aux moyens syntoniseurs RF (7) pour lui appliquer des signaux RF ; et les moyens de transmission de signal comprennent des moyens diviseurs de puissance (11) ayant une entrée et deux sorties, pour diviser entre les deux sorties les signaux qui sont appliqués à une entrée ; l'entrée des moyens diviseurs de puissance étant connectée aux moyens syntoniseurs RF et les deux sorties des moyens diviseurs de puissance étant respectivement connectées aux premier (17, 19) et second (13) canaux de transmission de signal.

9. Appareil selon l'une quelconque des revendications 3 à 8, dans lequel le second canal de transmission (13) est pratiquement identique au premier canal de transmission (17, 19) à tous égards, à l'exclusion des moyens de retard.

10. Un procédé de détermination de l'angle d'arrivée d'un signal RF se propageant dans l'espace, comprenant les étapes suivantes :
on échantillonne le signal qui est reçu à chacun de deux emplacements espacés, pour produire un train de signal série contenant des échantillons alternés du signal RF déplacés dans le temps ;
caractérisé en ce que :
on aiguille ce train vers deux canaux, à savoir un premier canal et un second canal ;
on retarde le passage du train de signal RF à travers le premier canal, pour retarder l'arrivée des signaux d'un intervalle prédéterminé ; et
on compare les signaux de sortie des deux canaux et on détermine la différence de phase entre les signaux provenant des deux canaux.
